# EUROPÄISCHE PATENTSCHRIFT

(11) **EP 4 613 554 B1**
(45) Veröffentlichungstag und Bekanntmachung des Hinweises auf die Patenterteilung: **12.08.2026**
(21) Anmeldenummer: 24162065.7
(22) Anmeldetag: 07.03.2024
(51) Int. Cl.: B60P 7/06

(54) **FLEXIBLES LUFTKISSENSYSTEM ZUR LADUNGSSICHERUNG IN LADERÄUMEN**
FLEXIBLE AIR BAG SYSTEM FOR LOAD SECURING IN CARGO SPACES
SYSTÈME À COUSSIN D'AIR FLEXIBLE POUR LA SÉCURISATION DE CHARGE DANS DES CALES

(43) Veröffentlichungstag der Anmeldung: 10.09.2025
(73) Patentinhaber: Kriening, Enrico, 04916 Herzberg/Elster (DE)
(72) Erfinder: Kriening, Enrico, 04916 Herzberg/Elster (DE)
(74) Vertreter: Dinter, Tilo

(56) Entgegenhaltungen:
- GB-A- 2 181 997
- US-A- 2 674 206
- US-A- 3 554 135
- US-A- 4 013 018
- US-A- 5 833 413

## Beschreibung

Die Erfindung betrifft die Ladungssicherung in Laderäumen, beispielsweise Lastkraftwagen (LKW) und ein dafür vorgesehenes flexibles System. "Lastkraftwagen" werden im Dokument auch mit LKW abgekürzt.

Bekannt sind lose aufblasbare Staupolster zur Ladungssicherung und dazugehörige Schnellfüllpistolen sowie die Verwendung von Luftkissen für LKW. Solche können zwischen das Ladungsgut gepackt und aufgeblasen werden. Auch ein vorheriges Aufblasen ist denkbar.

WO 2008/086584 A1 beschreibt Seitenvorhänge für LKW- bzw. Anhängeraufbauten zur Sicherung der Ladung gegenüber dem Herunterfallen auf die Straße. Eine Sicherung im Innern und zwischen den einzelnen Ladungsgütern ist nicht möglich.

Bekannt sind auch kistenförmige Einbauten für LKW für Schüttgut, wie in US 4124136 A oder BR 9202694 A oder auch Auskleidungsvorrichtungen für Ladungsbehälter, wie in EP 0287640 A1. Eine Sicherung einzelner Ladungsgüter untereinander ist damit nicht möglich. Andere Luftkissensysteme zur Ladungssicherung sind z.B. von US 4 013 018 A, US 2 674 206 A oder GB 2 181 997 A bekannt.

Aufgabe der Erfindung ist es ein System zur Ladungssicherung in Laderäumen bereitzustellen, welches die Sicherung der Ladungsgüter untereinander bietet. Dabei soll auch das Verrutschen während der Fahrt verhindert werden können. Die Sicherung sollte sicher aber flexible, das heißt schnell anpassbar sein. Denn beim Umladen oder Ausladen eines Teils der Ladung sollte die Sicherung schnell wieder angebracht und an das neue Ladungsvolumen bzw. die Belegung der Ladeplätze angepasst werden können.

Diese Anpassung sollte ohne große Kraftanstrengung, wie Sie bei der Verwendung von Gurten nötig ist, auskommen.

Die Aufgabe wird mit den Merkmalen der unabhängigen Patentansprüche gelöst. Bevorzugte Ausführungen sind in den abhängigen Unteransprüchen beschrieben.

Gegenstand der Erfindung ist ein Luftkissensystem zur Ladungssicherung in Laderäumen (beispielsweise von Beförderungsfahrzeugen wie Lastkraftwagen/LKWs, Transportern, in Satteln oder von Ladecontainern), umfassend:
- mindestens eine Schiene zur Befestigung (oben horizontal oder seitlich vertikal) im Laderaum,
- mindestens ein mit der Schiene verbundenes und aufblasbares Luftkissen, mit einem Volumen von jeweils 0,01 bis 10m³,
- wobei das Luftkissen an solchen Außenkanten, die nicht mit der oder den Schienen verbunden sind, jeweils mindestens 2 Ösen (das heißt. ringförmige randverstärkte Öffnungen) und/oder Haken aufweist.

"Ladungssicherung in Laderäumen" bedeutet sinnvoller Weise Sicherung des Ladungsgutes im Ladungsraum des jeweiligen Beförderungsfahrzeugs gegen ungewolltes Verrutschen während des Transports.

Ein "Luftkissensystem" im Sinne der Erfindung ist also: Schiene(n) mit Luftkissen. Es ist durchaus möglich, im Laderaum auch mehrere solche Luftkissensysteme hintereinander anzuordnen, wobei jedes erfindungsgemäß mindestens eine Schiene und das zugehörige Luftkissen umfasst.

Bei der Ladungssicherung geht es um die Sicherung von Ladungsgütern, welche (in Abgrenzung von Schüttgut) erkennbar ein Volumen von mindestens 0,008m³ aufweisen, beispielsweise mindestens 0,2m x 0,2m x 0,2m.

"Oben" bzw. "seitlich" (bzgl. der Befestigung der Schiene im Ladungsraum) bezieht sich auf die Ausrichtung des Ladungsraumes während des Transports (also während der Fahrt des zugehörigen Befördungsfahrzeugs), d.h. in seinem aufrechten, das heißt fahrbaren Zustand. "Oben" steht somit für eine "horizontale" Ausrichtung und "seitlich" für eine "vertikale". "Unten" steht für die der Straße zugewandte Richtung, "oben" für die der Straße abgewandte Richtung. Zur Befestigung hat die Schiene sinnvollerweise an beiden Enden Haken (hakenförmig), Vorsprünge (gerade) oder Klemmflächen. Die Schiene kann eine Stange fester Länge oder auch eine Teleskopschiene sein. Sie kann auch eine Aufrollfunktion aufweisen und somit als Aufrollschiene ausgestaltet sein, so dass das befestigte Luftkissen innerhalb der Schiene aufgerollt werden kann.

Das "aufblasbare Luftkissen" ist erkennbar luftdicht ausgestaltet. Es hat im Wesentlichen Ecken im Winkel von 90°, das heißt es kann rechteckig oder quadratisch sein. Der Begriff Luftkissen umfasst auch nicht aufblasbare Randbereiche, die jedoch sinnvollerweise eine Breite von maximal 20cm aufweisen können. Es ist auch möglich, dass an einer Schiene mehrere Luftkissen befestigt (also mit ihr verbunden) sind. Die Dicke jedes aufblasbaren Luftkissens (im aufgeblasenen Zustand) sollte bevorzugt 1m oder sogar 50cm nicht überschreiten. Als Untergrenze sollte sie bevorzugt 20cm nicht unterschreiten.

Die "Ösen oder Haken" dienen der Befestigung mittels Haken (im Falle der Ösen) oder Schnüren (im Falle der Haken) im Ladungsraum. Das heißt, Haken könnten in die beiden Ösen oder Schnüren an die beiden Haken (ein-)geführt werden.

Gegenstand der Erfindung ist ebenfalls die Verwendung des erfindungsgemäßen Luftkissensystems zur Ladungssicherung in einem Ladungsraum.

### Vorteile

Vorteil der Erfindung in dieser beschriebenen Form ist, dass sie die Sicherung der Ladungsgüter untereinander erlaubt. Das Verrutschen während der Fahrt wird verhindert.

Darüber hinaus ist vor allem vorteilhaft, dass flexibel gesichert werden kann. Das heißt, dass eine schnelle Anpassung möglich ist. Denn beim Umladen oder Ausladen eines Teils der Ladung kann die Sicherung schnell wieder angebracht und an das neue Ladungsvolumen bzw. die Belegung der Ladeplätze angepasst werden.

Weiterer Vorteil ist, dass die Neuanpassung an die sich bei jedem Ladevorgang verändernde Belegung der Ladeplätze ohne große Kraftanstrengung möglich ist, denn auf Gurte kann verzichtet werden. Vielmehr kann der veränderten Belegungssituation durch ein verändertes Aufblasen der Luftkissen und durch die Veränderung der Befestigung mittels der Ösen bzw. Haken begegnet werden. Teile des erfindungsgemäßen Luftkissensystems können unter Spannung gesetzt werden, wobei gleichzeitig andere Teile lose nach unten hängen.

Des Weiteren ist sogar möglich, dass ein Teil des Luftkissens eines solchen Luftkissensystems senkrecht zur Fahrtrichtung (d.h. senkrecht zur Länge des Laderaums) und ein anderer Teil desselben Luftkissens in eine andere Richtung verläuft, das heißt, dass "Knicke" möglich sind, so dass ein Luftkissen (beispielsweise am Boden mittels der Ösen bzw. Haken befestigt) "um die Ecke" verläuft - wobei die bspw. oben befindliche Schiene gerade ist und keinen Knick aufweist. Dies spart (verglichen mit losen aufblasbaren Staupolstern aus dem Stad der Technik) Aufwand bei dem unter Spannung Bringen (Aufblasen).

### Bevorzugte Ausführungsformen

Bevorzugt handelt es sich bei dem Ladungsraum um einen LKW- oder Transporterladeraum oder einen Cointainer.

In einer bevorzugten Ausführungsform der Erfindung liegt das Volumen des Luftkissens bei 7m³ (wie beispielsweise mit den Abmessungen: HxBxDicke = 2,5m x 5m x 0,5m) oder bei 4m³ (wie beispielsweise bei HxBxDicke = 2,5m x 2,5m x 0,5m), jeweils ±10% des Volumens. Bevorzugte Bereiche könnten sein 4-10m³, sogar 3-8m³, 4-7m³ etc.

Erfindungsgemäß weist das Luftkissen an den Außenkanten, die nicht mit der oder den Schienen verbunden sind, jeweils mindestens 3 Ösen oder Haken auf, besonders bevorzugt 3-6, oder auch genau 3.

Der Abstand benachbarter Ösen bzw. Haken beträgt in einer bevorzugten Ausführungsform der Erfindung 15cm bis 1,50m, oder auch 15cm-1m oder sogar 15cm bis 50cm.

Bevorzugt ist bei der Erfindung die Schiene eine gerade Schiene, ganz besonders bevorzugt ist sie eine gerade Teleskopschiene (das heißt, sie ist längenveränderbar in beiden Richtungen und umfasst einen Arretierungsmechanismus, beispielsweise eine Klemmschraube bzw. Klemmhebel, welcher zur Arretierung auf das Schieneninnere drückt, oder Einrastbolzen, welcher durch ein Loch im Schieneninneren stößt).

In einer bevorzugten Ausführungsform der Erfindung umfasst das Luftkissen einen Druckluftanschluss für die Verbindung mit dem Druckluftsystem eines Lastkraftwagens, Transporters bzw. des jeweiligen Beförderungsfahrzeugs (beispielsweise zum Ausgang am Ladekompressor).

In einer bevorzugten Ausführungsform der Erfindung ist die Verbindung zwischen Schiene und Luftkissen ausgewählt aus einer Schweißverbindung, einer Klebeverbindung, einer Nahtverbindung, einer Reißverschlussverbindung, Klettverschlussverbindung, einer Nietverbindung (mit bspw. Aluminiumnieten) und einer Schraubenverbindung. Sie muss jedenfalls zugfest ausgestaltet sein, so dass auch beim Aufblasen des Luftkissens und den entstehenden Zugkräften das Luftkissen nicht von der oder den Schienen abreißen kann. Zur Verstärkung der Niet- oder Schraubenverbindung ist es denkbar, diese beispielsweise mittels eines schmelzbaren Metalls (bevorzugt Cu, Al oder Fe) oder einer schmelzbaren Metalllegierung (bevorzugt Bronze oder Messing) zu verstärken, um eine noch bessere Reißfestigkeit zu erreichen. Dabei würden Niete bzw. Schrauben damit zusätzlich an der Schiene gesichert.

Bei einer Schweißverbindung ist das Luftkissenmaterial mit der Schiene mittels erfolgter Schmelzung verbunden (das Luftkissenmaterial ist dann sinnvollerweise ein schmelzbares Polymer). Die Schiene könnte aus dem gleichen Polymer sein, Metall ist aber auch möglich.

Bei einer Klebeverbindung ist das Luftkissen mit der Schiene verklebt (günstig bei Luftkissen aus mehreren unterschiedlichen Lagen, wie Stoff mit Polymerbeschichtung).

Bei einer Nahtverbindung ist das Luftkissen mit der Schiene vernäht, das heißt das Luftkissen kann an der zur Schiene weisenden Seite Ösen haben, mittels derer es mit der Schiene mit Hilfe von Strick oder Seilen verbunden ist. Ein Vernähen ist aber auch ohne Ösen, wenn das Vernähen in einem nicht aufblasbaren Randbereich erfolgt, möglich.

Bei einer Reißverschlussverbindung befindet sich an der der Schiene zugewandten Kante des Luftkissens ein Reißverschluss. Auch die Schiene weist in dieser Variante einen Reißverschluss auf, beispielsweise mittels eines um die Schiene laufenden (die Schiene ummantelnden) Stoffbezugs, an den ein Reißverschluss angenäht ist.

Bei einer Schraubenverbindung kann beispielsweise das Luftkissen auf der Schiene (mit seinem Randbereich) angelegt werden und mittels Schrauben, bevorzugt selbstdrehender/gewindedrehender Schrauben) mit der Schiene verbunden werden.

Vorteil ist eine zugfeste Verbindung zwischen Schiene und Luftkissen. Insbesondere die Reißverschlussverbindung erlaubt einen schnellen Wechsel des Luftkissens an der Schiene (beispielsweise bei Leckage des Luftkissens) oder eine nur hälftige Belegung der Schiene mit Luftkissen (bezogen auf die Länge der Schiene).

In bevorzugten Ausführungen der Erfindung ist das Schienenmaterial ausgewählt aus Polymer, Metall, Holz, Faserverbundwerkstoff und Carbonfaser. Insbesondere Faserverbundwerkstoff und Carbonfaser haben den Vorteil eines sehr geringen Gewichts bei gleichzeitig hoher Festigkeit.

Eine ebenfalls bevorzugte Ausführungsform der Erfindung ist dadurch gekennzeichnet, dass die Schiene:
- eine (korrosionsbeständige) Metallschiene aus Edelstahl, verzinktem Stahl oder Aluminium ist, und/oder
- eine Länge von 2,40 - 2,50 m hat, und/oder
- ein quadratisches oder rechteckiges oder rundes Profil hat.

Besonders bevorzugt ist es, wenn die Schiene:
- eine Metallschiene aus Edelstahl, verzinktem Stahl oder Aluminium ist, und/oder
- eine Länge von 2,40 - 2,50 m hat.

Im Falle einer Teleskopschiene ist ein rundes Profil bevorzugt, aber auch ein eckiges, wie oben genannt, möglich. Ein rundes Schienenprofil hält mehr Zugkräften stand. Bevorzugt ist die Schiene, unabhängig vom Material, hohl. Lediglich bei einer Aluminiumschiene wäre auch ein Vollprofil möglich. Vollprofil bedeutet, dass die Schiene nicht hohl, sondern ausgefüllt ist.

Vorteil der genannten Länge ist, dass das Luftkissensystem gut für gängige Laderäume geeignet ist. Stahl bzw. Aluminium geben hervorragende Festigkeit.

In einer ebenfalls bevorzugten Ausführung des Luftkissensystems weist das Material des Luftkissens mindestens eine Stoffschicht mit Kunststoffbeschichtung auf den nach innen weisenden Seiten auf und das Luftkissen weist umlaufend einen nicht aufblasbaren Randbereich von 3-20cm Breite (besonders bevorzugt 6-20cm oder sogar 2-20cm oder 6-12cm) auf, innerhalb dessen alle der Ösen oder Haken angeordnet sind. Vorteilhaft wird dabei aufgrund der außen befindlichen Stoffschicht statische Reibung zwischen dem Kunststoff verschiedener Luftkissen oder auch zwischen Luftkissen und anderen Gegenständen vermieden.

Es ist dennoch auch eine Ausführung möglich, bei der sich die Kunststoffbeschichtung auf den nach außen weisenden Flächen der Stoffschicht des Luftkissens befindet. Vorteil einer solchen innenliegenden Stoffschicht sind verringerte Reibkräfte an dem luftdichten Material (sinnvollerweise Kunststoff) bei Reibungen insbesondere im nicht aufgeblasenen Zustand, in welchem das Luftkissen oft schon zwischen den noch lose gelagerten Ladegütern hängt und eingequetscht werden kann.

Der umlaufende nicht aufblasbare Randbereich mit den Ösen bzw. Haken sichert, dass wirkende Zugkräfte auf die Ösen/Haken gleichmäßig auf beide Seiten des Luftkissens übertragen werden und nicht eine Ösenhälfte auf der einen Seitenfläche des Luftkissens mehr Zugkraft stand halten muss als die Fläche auf der anderen Luftkissenseite.

In einer weiteren bevorzugten Ausführungsform der Erfindung ist die Schiene (und auch alle ggfs. weiteren Schienen dieses Luftkissensystems) Aufrollschienen, umfassend eine Rückzugsvorrichtung zum Auf- und Abrollen des Luftkissens, die eine Rückzugskraft auf das Luftkissen ausübt und das manuelle Abrollen des Luftkissens (auch Ausziehen genannt) aus den Schienen gegen die Rückzugskraft ermöglicht (sinnvollerweise im noch nicht vollständig aufgeblasenen Zustand).

Rückzugsvorrichtungen können beispielsweise sein: eine Metallschnecke (Automatikschnecke unter Spannung, wie bspw. bei Elektrokabeln von Staubsaugern) oder mittels Sperrklinken (Zahnrad mit spitzwinkeligen Zähnen und einem stumpfen Haken, der in jeden einzelnen Zahn des Zahnrades greift, sodass das Rad nicht in die Gegenrichtung gedreht werden kann). Die Herstellung der nötigen Spannung kann beispielsweise mittels Elektromotor oder auch mittels eines händisch zu betätigenden Seilzuges erfolgen, mit dem das Luftkissen unter Spannung gesetzt wird. Die Rückzugsvorrichtung sorgt dann dafür, dass die Spannung erhalten bleibt.

Vorteil dabei ist, dass ein sehr schnelles Anbringen der Luftkissen um das Ladungsgut herum möglich ist und gleichzeitig aber ein Verstauen ungenutzter Luftkissen (beispielsweise oben an einer horizontal befestigten Schiene oder seitlich an einer vertikal befestigten Schiene) leicht möglich ist.

Es ist ebenfalls bevorzugt, wenn bei der Erfindung die Schiene einen runden oder eckigen Querschnitt, ausgewählt aus rechteckig und quadratisch, hat und wenn das Luftkissen ein Volumen von 0,45-4 m³ hat, besonders bevorzugt 0,6-2m³oder auch 0,75-1m³. Ganz besonders bevorzugt ist dabei ein solcher rechteckiger oder quadratischer Querschnitt. Vorteil dieser Ausführungsform ist eine besonders gute Eignung für die gängigen Ladungsgüter und die damit einhergehenden Anforderungen an die Sicherung untereinander.

Es ist ebenfalls bevorzugt bei der Erfindung, wenn mit einer Schiene, jeweils zwei (oder sogar drei) Luftkissen verbunden sind. Dies entspricht einer bevorzugten Ausführung des Luftkissensystems mit mindestens zwei (oder besonders bevorzugt sogar drei) Luftkissen von im Wesentlichen gleicher Größe, die in Blickrichtung entlang der Schiene an gleichen Positionen an der Schiene, und somit parallel zueinander, mit der Schiene verbunden sind.

Beispielweise bei einer oben horizontal angebrachten Schiene würden so zwei oder drei Luftkissen (auch unterschiedliche Breiten möglich) an ein und derselben Schiene hängen, so dass ein Luftkissen nach vorn und das andere nach hinten oder auch senkrecht in eine Spalte zwischen anderen Ladungsgütern geschoben werden kann. Bevorzugt sind die Eigenschaften des erfindungsgemäßen Luftkissens aber bei beiden (oder den drei) Luftkissen) an einer Schiene gleich.

"Im Wesentlichen gleiche Größe" bedeutet, dass die Grundflächen beider parallel angeordneter Luftkissen zu mindestens 80% übereinstimmen.

In einer bevorzugten Ausführung der Erfindung befindet sich an zwei sich gegenüberliegenden Außenkanten des Luftkissens jeweils eine Schiene. So könnte, bspw. im Falle der horizontalen Ausrichtung beider Schienen im Laderaum, eine oben und eine unten im Laderaum befestigt werden.

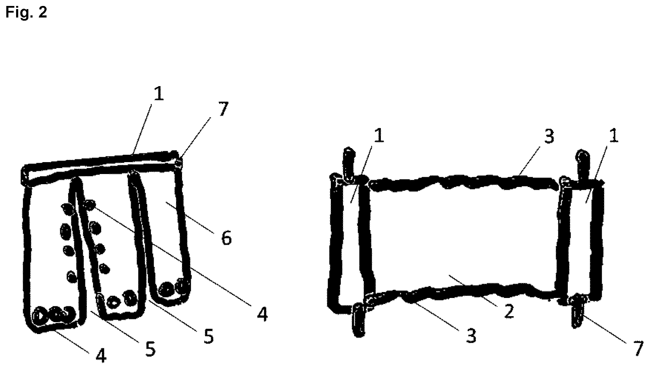

Im Folgenden werden Ausführungen beschrieben, die konzeptionell einer Variante mit Einschnitten, wie beispielhaft in Fig. 2/links dargestellt, entsprechen:
In einer bevorzugten Ausführungsform der Erfindung handelt es sich um das erfindungsgemäße Luftkissensystem, mit einer Schiene zur Befestigung oben horizontal im Laderaum, wobei das Luftkissen mittels Einschnitte (genauer: mindestens eines Einschnitts) von mindestens 70% der Länge des Luftkissens (betrachtet in einer Richtung ausgehend von der der Schiene gegenüberliegenden Seite in Richtung der Schiene), in mindestens zwei Luftkissenzungen unterteilt ist. Die Einschnitte verlaufen demnach von der der Schiene gegenüberliegenden Außenkante des Luftkissens in Richtung der Schiene. Sinnvollerweise weist diese Ausführung nur eine Schiene auf.

"Mindestens 70% der Länge" bedeutet nicht, dass der Einschnitt vollständig durch die Länge des Luftkissens verlaufen muss, denn die entstandenen Luftkissenzungen sind noch gemeinsam am oberen Ende mit der Schiene verbunden.

"Länge" bezieht sich hier erkennbar auf die Abmessung des Luftkissens von unten nach oben, also in Richtung der Höhe des Laderaums (die Richtungen während des Transports; auch hier inklusive eventuell vorhandener Randbereiche des Luftkissens.

Empfehlenswert ist beispielsweise eine Länge der Einschnitte von 70-98% der Länge des Luftkissens, oder auch 70-90% oder sogar 80-90%.

Im Falle einer Reißverschlussverbindung zwischen Schiene und Luftkissen (wie weiter oben für eine andere bevorzugte Ausführung beschrieben) ist es allerdings möglich, dass der Einschnitt fast vollständig durch das Luftkissen verläuft, so dass beide Luftkissenzungen nur durch den Teil des Reißverschlusses auf Seiten des Luftkissens zusammengehalten werden (wenn man den Reißverschluss als Teil des Luftkissens zählt).

Ganz besonders bevorzugt gibt es zwei Einschnitte, so dass drei Luftkissenzungen vorhanden sind. Auch 2-3 Einschnitte sind vorteilhaft.

Die mindestens zusammenhängende Fläche eines erfindungsgemäßen Luftkissens (bzw. sogar einer solchen Luftkissenzunge dieser zuvor genannten Ausführungsform) beträgt 30cmx200cm, das heißt die Länge einer Seite des Luftkissens (oder entsprechend die Breite einer einzelnen Luftkissenzunge, falls Einschnitte vorhanden sind) ist mindestens 30cm und die Länge der daran angrenzen Seite ist mindestens 200cm.

Vorteil der Ausführung mit Einschnitt und Luftkissenzungen ist, dass besonders effektiv ausgehend von einer einzelnen Schiene verschieden Leerräume im Laderaum gefüllt werden können - diese Leerräume müssen sich nicht in einer Ebene befinden - denn die Luftkissenzungen können in unterschiedliche Richtung weisen. Je nach Positionierung des einzelnen Ladungsgutes ist eine separate Ausrichtung der Luftkissenzungen möglich, mittels Befestigung der Ösen bzw. Haken an dem Ladeflächenboden (bspw. eines LKW) oder den Ladeflächenseiten - nach vorn, nach hinten oder in alle anderen Richtungen. Leere Lufträume im Laderaum können damit reduziert werden

In einer ganz besonders bevorzugten Variante der oben genannten Ausführungsform mit Einschnitt und mindestens zwei Luftkissenzungen ist jede der Luftkissenzungen separat aufblasbar und somit hinsichtlich Ihres Volumens von der anderen abgeschlossen. Sinnvollerweise besitzt dabei bevorzugt jede Luftkissenzunge einen eigenen Luftanschluss zur separaten Befüllung.

Vorteil der separaten Aufblasbarkeit ist, dass die unterschiedlichen Größen der Leerräume (das heißt das unterschiedliche Volumen) bedarfsgerecht durch die Luftkissenzungen ausgefüllt werden können.

Es ist ebenfalls ganz besonders bevorzugt (in dieser Ausführung mit Einschnitt und mindestens zwei Luftkissenzungen), wenn entlang solcher Seiten aller Luftkissenzungen, die zu den Einschnitten weisen, mindestens 3 Ösen oder Druckknöpfe zur Verbindung einzelner Luftkissenzungen vorhanden sind (das heißt die Ösen verlaufen entlang der Einschnitte auf den zwei Seiten der angrenzenden Luftkissenzungen).

Vorteil dabei ist, dass, falls sich die Leerräume doch in einer Ebene, zumindest nah beieinander befinden, die Luftkissenzungen kurzerhand wieder miteinander verbunden werden können.

"Druckknöpfe" sind bekanntermaßen Verschlussmittel aus zwei kleinen, runden Teilen, von denen eines mit einer Vertiefung, das andere mit einem passenden Kopf versehen ist. Sie werden auf gegenüberliegenden Seiten des Materials festgenäht oder -genietet und zum Schließen ineinandergedrückt. Um auch hierbei die Aufblasbarkeit der Luftkissen zu gewährleisten, sind auch diese Ösen bzw. diese Druckknöpfe luftdicht mit der Luftkissenzunge verbunden oder befinden sich in nicht aufblasbaren (das heißt versiegelten) Randbereichen (die dazu an jeglichen Außenrändern der Luftkissenzungen vorhanden sein sollten, die nicht mit der Schiene verbunden sind).

Es ist ebenfalls ganz besonders bevorzugt (in der oben genannten Ausführung mit Einschnitt und mindestens zwei Luftkissenzungen), wenn im Luftkissen zwei Einschnitte und somit drei Luftkissenzungen vorhanden sind.

In weiteren bevorzugten Ausführungsformen der Erfindung hat das Luftkissen oder die einzelnen Luftkissenzungen eine Breite (Breite in Richtung der Breite des Laderaums) von 115-195cm (günstig für die Anwendbarkeit bei Europaletten, welche eine Grundfläche von 120x190 cm besitzen), oder bevorzugt sogar eine Breite von 120cm±10%, oder 190cm±10%. Für Einwegpaletten (Grundfläche 60cm x 80cm oder 120cm x 80cm oder 40cm x 60cm) eignet sich besonders eine Breite der Luftkissen oder der Luftkissenzungen von 50cm±10% oder 70cm±10%.

Im Folgenden werden Ausführungen beschrieben, die konzeptionell einer Variante zwei Schienen und Luftkissen dazwischen, wie beispielhaft in Fig. 2/rechts dargestellt, entsprechen:
In einer weiteren Ausführungsform der Erfindung hat das Luftkissensystem zwei Schienen zur Befestigung seitlich vertikal im Laderaum, wobei das Luftkissen mit zwei seiner sich gegenüberliegenden Seiten an den (beiden) Schienen befestigt ist. Das heißt, das Luftkissen ist auf einer Seite mit der einen Schiene und auf der anderen Seite mit der anderen Schiene verbunden. Es handelt sich bei beiden um die gleiche Verbindungsart, die beispielsweise wie weiter vorn beschrieben ausgewählt sein können.

In dieser Ausführung entspricht die Schienenlänge sinnvollerweise der Höhe eines LKW-Laderaums, das heißt ungefähr 2,30-2,50m, oder sogar 2,40-2,50m, auch 2,45-2,50m. Bei höheren Speditions-LKW könnte sie sogar 2,40-2,80m betragen, bei 3,5t-Fahrzeugen dagegen nur maximal 1,80m und bei Transportern eher 80cm-100cm. "Seitlich vertikal" im Sinne der Erfindung bedeutet hier im Falle von zwei Schienen, dass diese sinnvollerweise links und rechts im Laderaum (aber auch vorn und hinten oder sogar schräg versetzt, das heißt auf einer Diagonale der Laderaumfläche) eingesetzt werden können.

Ganz besonders vorteilhaft ist eine Kombination dieser Ausführung mit zwei Schienen und Luftkissen "dazwischen" mit der weiter oben beschriebenen Ausführung, bei der die Schienen Aufrollschienen sind, umfassend eine Rückzugsvorrichtung zum Auf- und Abrollen des Luftkissens, die eine Rückzugskraft auf das Luftkissen ausübt und das manuelle Abrollen des Luftkissens aus den Schienen gegen die Rückzugskraft ermöglicht.

Vorteil dieser Kombination ist, dass die eine Schiene beim Lösen vom Laderaum zu der anderen noch befestigten Schiene gelegt werden kann und sich dabei das Luftkissen (sinnvollerweise im nicht voll aufgeblasenen Zustand) selbsttätig in die Schienen aufrollt und Platz schafft für das Be- und Entladen des Laderaums.

Es ist besonders bevorzugt, wenn in der oben genannten Ausführungsform (mit zwei Schienen und dem Luftkissen dazwischen) in dem Luftkissen vertikale Verstärkungsstreben vorgesehen sind, welche parallel zu den am Luftkissen befestigten Schienen und im Innern des Luftkissens verlaufen. Vorteil dieser Ausführung ist eine Verstärkung des Luftkissens, so dass dieses formstabil ist, auch wenn es im Einsatz einmal nicht aufgeblasen worden ist, beispielsweise bei sehr leichten Transportgütern. Das Luftkissen hängt dann am oberen Randbereich nicht nach unten durch, sondern wird durch die Verstärkungsstreben "aufgespannt".

Als Verstärkungsstreben kommen beispielsweise in Betracht: Metalldrähte, Kunststoffstäbe oder Glasfaserstäbe (aus Glasfaserverbundmaterial), alle drei Arten mit einem Durchmesser von 1mm bis 1cm, oder auch 1mm-8mm, oder 1mm-5mm.

Der Abstand der Verstärkungsstreben im Luftkissen kann beispielsweise10-40cm betragen (oder auch 10-30cm, sogar 15-25cm.

Ganz besonders bevorzugt ist dabei, wenn sich an jedem Ende einer Verstärkungsstrebe eine Öse befindet, die auch durch das Luftkissenmaterial verläuft. Diese Ösen in der Verstärkungsstrebe entsprechen in dieser Ausführungsform somit den Varianten der Erfindung mit Ösen. Vorteil ist, dass damit die Krafteinwirkung auf das Luftkissen mittels der Öse auf die Verstärkungsstrebe übertragen werden kann. Ein Reißen des Luftkissens bei zu starker Zugkraft wird damit unwahrscheinlicher.

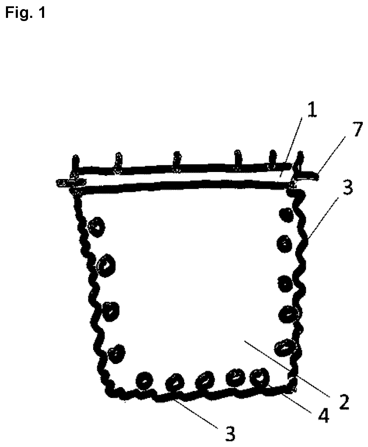

Die Fig. 1 und Fig. 2 zeigen ausschnittsweise drei verschiedene Ausführungsformen der Erfindung in Varianten für einen Lastkraftwagen:
Fig. 1 und Fig. 2/links: zwei Ausführungen mit jeweils einer Schiene 1.

Eine Variante der Erfindung gemäß Fig. 2/links weist Einschnitte 5 auf, so dass sich Luftkissenzungen 6 bilden.

Fig. 2/rechts: eine andere Ausführung mit zwei Schienen 1 als Aufrollschienen (zur Vereinfachung sind die Ösen bzw. Haken 4 nicht dargestellt).

Es ist zweckmäßig, die verschiedenen Ausführungsformen, wenn nicht anders angegeben, miteinander zu kombinieren.

Nachfolgend soll die Erfindung anhand mehrerer bevorzugter Ausführungsbeispiele eingehender erläutert werden. Sie sollen dabei die Erfindung nicht beschränken.

### Ausführungsbeispiele

### Ausführungsbeispiel 1:

Ausführungsbeispiel 1 entspricht Fig. 1. Dabei ist das Luftkissenmaterial Polethylen mit einer Baumwollschicht (jeweils außen). Es kommen Ösen 4 zum Einsatz. Die Schiene 1 ist eine runde Aufrollschiene. Zur Befestigung im LKW-Laderaum besitzt sie vorstehende Vorsprünge an beiden Enden.

### Ausführungsbeispiel 2:

Ausführungsbeispiel 2 entspricht Fig. 2/links und weist eine Schiene 1 auf. Das Luftkissen 2 hat zwei Einschnitte 5 zu 98% der Luftkissenlänge.

Als Verbindung des Luftkissens 2 mit der Schiene 1 wurde eine Reißverschlussverbindung eingesetzt (nicht erkennbar). Die Schiene 1 ist rund. Sie ist mit einem Stoff ummantelt, an dem der eine Teil des Reißverschlusses angebracht ist.

### Ausführungsbeispiel 3:

Ausführungsbeispiel 3 entspricht Fig. 2/rechts mit zwei Schienen 1 als Aufrollschienen. Ösen (nicht dargestellt) sind vorhanden.

### Bezugszeichen

- 1: Schiene
- 2: Luftkissen
- 3: Solche Außenkanten, die jeweils nicht mit der Schiene verbunden sind
- 4: Ösen oder Haken
- 5: Einschnitte
- 6: Luftkissenzungen
- 7: Vorsprünge, Haken oder Klemmflächen (Zur Befestigung der Schiene)

## Patentansprüche

1. Luftkissensystem zur Ladungssicherung in Laderäumen, umfassend:
- mindestens eine Schiene (1) zur Befestigung oben horizontal oder seitlich vertikal im Laderaum,
- mindestens ein mit der Schiene verbundenes und aufblasbares **Luftkissen** (2), mit einem Volumen von jeweils **0,01 bis 10m³,**
- wobei das Luftkissen **an solchen Außenkanten,** die nicht mit der oder den Schienen verbunden sind (3), jeweils **mindestens 3 Ösen und/oder Haken** (4) aufweist,
**dadurch gekennzeichnet, dass**
die Verbindung zwischen Schiene (1) und Luftkissen (2) ausgewählt ist aus einer Schweißverbindung, einer Klebeverbindung, einer Nahtverbindung, einer Reißverschlussverbindung, Klettverschlussverbindung, einer Nietverbindung und einer Schraubenverbindung, und,
dass alle Schienen (1) **Aufrollschienen** sind, umfassend eine Rückzugsvorrichtung zum Auf- und Abrollen des Luftkissens (2), die eine Rückzugskraft auf das Luftkissen ausübt und das manuelle Abrollen des Luftkissens aus den Schienen gegen die Rückzugskraft ermöglicht.

2. Luftkissensystem nach Anspruch 1, wobei die Schiene:
• eine Metallschiene aus Edelstahl, verzinktem Stahl oder Aluminium ist, und/oder
• eine Länge von 2,40 - 2,50 m hat.

3. Luftkissensystem nach einem der Ansprüche 1 bis 2, wobei das Material des Luftkissens (2) mindestens eine Stoffschicht mit Kunststoffbeschichtung auf den nach innen weisenden Seiten aufweist und wobei das Luftkissen umlaufend einen nicht aufblasbaren Randbereich von 6-20cm Breite aufweist, innerhalb dessen alle der Ösen oder Haken angeordnet sind.

4. Luftkissensystem nach einem der Ansprüche 1 bis 3, wobei die Schiene einen eckigen Querschnitt, ausgewählt aus rechteckig und quadratisch, hat und wobei das Luftkissen ein Volumen von 0,45-4 m³ hat.

5. Luftkissensystem nach einem der Ansprüche 1 bis 4, mit mindestens zwei Luftkissen von im Wesentlichen gleicher Größe, die in Blickrichtung entlang der Schiene an gleichen Positionen an der Schiene, und somit parallel zueinander, mit der Schiene verbunden sind.

6. Luftkissensystem nach einem der Ansprüche 1 bis 5, wobei die Schiene eine gerade Teleskopschiene ist.

7. Luftkissensystem nach einem der Ansprüche 1 bis 6, mit einer Schiene (1) zur Befestigung oben horizontal im Laderaum, wobei das Luftkissen mittels Einschnitte (5) von mindestens 70% der Länge des Luftkissens, ausgehend von der der Schiene gegenüberliegenden Seite in Richtung der Schiene, in mindestens zwei **Luftkissenzungen** (6) unterteilt ist.

8. Luftkissensystem nach Anspruch 7, wobei jede Luftkissenzungen (6) separat aufblasbar und somit hinsichtlich Ihres Volumens von der anderen abgeschlossen ist.

9. Luftkissensystem nach einem der Ansprüche 7 oder 8, wobei entlang solcher Seiten aller Luftkissenzungen (6), welche zu den Einschnitten (5) weisen, mindestens 3 Ösen oder Druckknöpfe zur Verbindung einzelner Luftkissenzungen vorhanden sind.

10. Luftkissensystem nach einem der Ansprüche 7bis 9, mit zwei Einschnitten (5) und somit drei Luftkissenzungen (6).

11. Luftkissensystem nach einem der Ansprüche 1 bis 6, mit zwei Schienen (1) zur Befestigung seitlich vertikal im Laderaum, wobei das Luftkissen (2) **mit zwei seiner sich gegenüberliegenden Seiten an beiden Schienen befestigt** ist.

12. Luftkissensystem nach Anspruch 11, wobei in dem Luftkissen (2) vertikale Verstärkungsstreben vorgesehen sind, welche parallel zu den am Luftkissen befestigten Schienen und im Innern des Luftkissens verlaufen.

13. Luftkissensystem nach Anspruch 12, wobei sich an jedem Ende einer Verstärkungsstrebe eine Öse befindet, die auch durch das Luftkissenmaterial verläuft.

## Claims

1. Air cushion system for securing loads in cargo holds, comprising:
- at least one **rail** (1) for fastening horizontally at the top or vertically at the side in the cargo hold,
- at least one inflatable **air cushion** (2) connected to the rail, each with a volume of **0.01 to 10 metres³,**
- wherein the air cushion has **at least 3 eyelets and/or hooks** (4) **on** each of **those outer edges** which are not connected to the rail or rails (3),
**characterized in, that**
the connection between the rail (1) and the air cushion (2) is selected from a welded connection, an adhesive connection, a seam connection, a zip fastener connection, a hook- and-loop fastener connection, a riveted connection and a screw connection, and
that all rails (1) are **roll-up rails,** comprising a retraction device for rolling up and unrolling the air cushion (2), which exerts a retraction force on the air cushion and enables the manual unrolling of the air cushion from the rails against the retraction force.

2. The air cushion system according to claim 1, wherein the rail:
• is a metal rail made of stainless steel, galvanised steel or aluminium, and/or
• has a length of 2.40 - 2.50 metres.

3. The air cushion system according to one of claims 1 to 2, wherein the material of the air cushion (2) has at least one fabric layer with a plastic coating on the inward-facing sides and wherein the air cushion has a non-inflatable edge region of 6-20 cm width all round, within which all the eyelets or hooks are arranged.

4. The air cushion system according to one of claims 1 to 3, wherein the rail has an angular cross-section selected from rectangular and square, and wherein the air cushion has a volume of 0.45-4 meters³.

5. The air cushion system according to one of claims 1 to 4, with at least two air cushions of substantially equal size, which are connected to the rail at equal positions on the rail, and thus parallel to each other, in the direction of view along the rail.

6. The air cushion system according to one of claims 1 to 5, wherein the rail is a straight telescopic rail.

7. The air cushion system according to one of claims 1 to 6, with one rail (1) for fastening horizontally at the top in the cargo hold, wherein the air cushion is divided into at least two **air cushion tongues** (6) by means of incisions (5) of at least 70% of the length of the air cushion, starting from the side opposite the rail in the direction of the rail.

8. The air cushion system according to claim 7, wherein each air cushion tongue (6) is inflatable separately and is thus closed off from the other in terms of its volume.

9. The air cushion system according to one of claims 7 or 8, wherein along such sides of all air cushion tongues (6), which face towards the incisions (5), at least 3 eyelets or press studs are provided for connecting individual air cushion tongues.

10. The air cushion system according to one of claims 7 to 9, with two incisions (5) and thus three air cushion tongues (6).

11. The air cushion system according to one of claims 1 to 6, with two rails (1) for fastening vertically at the side in the cargo hold, wherein the air cushion (2) is **connected to both rails with two of its opposite sides.**

12. The air cushion system according to claim 11, wherein vertical reinforcing struts are provided inside the air cushion (2), which run parallel to the rails attached to the air cushion and which run in the interior of the air cushion.

13. The air cushion system according to claim 12, wherein there is an eyelet at each end of the reinforcing struts, these eyelets extending through the air cushion material.

## Revendications

1. Système à coussins d'air destiné au maintien fixe de chargements dans des espaces de chargement, comprenant :
- au moins un rail (1) destiné à être fixé horizontalement en haut ou verticalement sur le côté dans l'espace de chargement,
- au moins un coussin d'air (2) gonflable relié au rail et comportant un volume allant de respectivement 0,01 à 10 m³,
- dans lequel le coussin d'air présente, au niveau de bords extérieurs qui ne sont pas reliés au ou aux rails (3), respectivement au moins trois œillets et/ou crochets (4),
**caractérisé en ce que** la liaison entre le rail (1) et le coussin d'air (2) est choisie parmi une liaison par soudage, une liaison par collage, une liaison par couture, une liaison par fermeture à glissière, une liaison par velcro, une liaison par rivetage et une liaison par vissage, et **en ce que** tous les rails (1) sont des rails d'enroulement, comprenant un dispositif de rétraction destiné à enrouler et dérouler le coussin d'air (2), lequel dispositif de rétraction exerce une force de rétraction sur le coussin d'air et permet de dérouler manuellement le coussin d'air hors des rails à l'encontre de la force de rétraction.

2. Système à coussins d'air selon la revendication 1, dans lequel le rail :
• est un rail métallique en acier inoxydable, en acier galvanisé ou en aluminium, et/ou
• possède une longueur allant de 2,40 à 2,50 m.

3. Système à coussins d'air selon l'une des revendications 1 à 2, dans lequel le matériau du coussin d'air (2) présente au moins une couche de tissu comportant un revêtement en matière plastique sur les côtés tournés vers l'intérieur, et dans lequel le coussin d'air présente sur sa circonférence une zone de bord non gonflable d'une largeur allant de 6 à 20 cm, à l'intérieur de laquelle sont disposés tous les œillets ou crochets.

4. Système à coussins d'air selon l'une des revendications 1 à 3, dans lequel le rail présente une section transversale angulaire, choisie parmi rectangulaire et carrée, et dans lequel le coussin d'air possède un volume allant de 0,45 à 4 m³.

5. Système à coussins d'air selon l'une des revendications 1 à 4, comportant au moins deux coussins d'air de tailles sensiblement identiques qui sont reliés, dans le sens de la vue, au rail en des positions identiques sur le rail le long du rail et donc parallèlement l'un à l'autre.

6. Système à coussins d'air selon l'une des revendications 1 à 5, dans lequel le rail est un rail télescopique droit.

7. Système à coussins d'air selon l'une des revendications 1 à 6, comportant un rail (1) destiné à être fixé horizontalement en haut dans l'espace de chargement, dans lequel le coussin d'air est divisé en au moins deux languettes de coussin d'air (6) au moyen d'entailles (5) couvrant au moins 70 % de la longueur du coussin d'air, en partant du côté opposé au rail en direction du rail.

8. Système à coussins d'air selon la revendication 7, dans lequel chaque languette de coussin d'air (6) peut être gonflée séparément et est ainsi indépendante de l'autre en termes de volume.

9. Système à coussins d'air selon l'une des revendications 7 ou 8, dans lequel au moins trois œillets ou boutons-pression sont prévus le long des côtés de toutes les languettes de coussin d'air (6) tournés vers les entailles (5) pour la liaison des différentes languettes de coussin d'air entre elles.

10. Système à coussins d'air selon l'une des revendications 7 à 9, comportant deux entailles (5) et donc trois languettes de coussin d'air (6).

11. Système à coussins d'air selon l'une des revendications 1 à 6, comportant deux rails (1) destinés à être fixés verticalement sur le côté dans l'espace de chargement, dans lequel le coussin d'air (2) est fixé aux deux rails par ses deux côtés opposés.

12. Système à coussins d'air selon la revendication 11, dans lequel des entretoises de renfort verticales sont prévues dans le coussin d'air (2), lesquelles s'étendent parallèlement aux rails fixés au coussin d'air et à l'intérieur du coussin d'air.

13. Système à coussins d'air selon la revendication 12, dans lequel un œillet qui s'étend également à travers le matériau du coussin d'air est prévu à chaque extrémité d'une entretoise de renfort.
